Europäisches Patentamt

European Patent Office

Office européen des brevets

(11) Numéro de publication: **0 208 604**
**B1**

(12) **FASCICULE DE BREVET EUROPEEN**

(45) Date de publication du fascicule du brevet: **14.03.90**

(51) Int. Cl.⁵: **H 04 J 3/18**

(21) Numéro de dépôt: **86401437.8**

(22) Date de dépôt: **27.06.86**

(54) Procédé et dispositif de conversion de multitrame de canaux numériques en multitrame de paquets.

(30) Priorité: **03.07.85 FR 8510180**

(43) Date de publication de la demande:
**14.01.87 Bulletin 87/03**

(45) Mention de la délivrance du brevet:
**14.03.90 Bulletin 90/11**

(84) Etats contractants désignés:
**DE GB IT NL SE**

(56) Documents cités:
**EP-A-0 098 388**
**US-A-3 213 201**
**US-A-4 229 815**

(73) Titulaire: **Servel, Michel**
**Le Rhu en Servel**
**F-22300 Lannion (FR)**

(73) Titulaire: **Thomas, Alain**
**2, Rue du Bal Landreau**
**F-44400 Rèze-les-Nantes (FR)**

(72) Inventeur: **Servel, Michel**
**Le Rhu en Servel**
**F-22300 Lannion (FR)**
Inventeur: **Thomas, Alain**
**2, Rue du Bal Landreau**
**F-44400 Rèze-les-Nantes (FR)**

(74) Mandataire: **Martinet & Lapoux**
**62, rue des Mathurins**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne d'une manière générale une adaptation de structures de trame entre une voie numérique entrante et une voie numérique sortante ayant des configurations de trame différentes. Plus précisément, l'invention a trait à un procédé pour convertir une multitrame entrante composée de M trames incluant chacune des mots ayant un nombre prédéterminé de digits et assignés respectivement à C canaux numériques multiplexés en une multitrame sortante composée de C paquets assignés respectivement aux canaux et contenant chacun M mots successifs du canal respectif.

Afin de ne point perdre d'informations au cours d'une telle conversion, il est connu du document EP—A—0098388 d'utiliser deux mémoires à accès aléatoire du type RAM disposées en parallèle, ayant chacune une capacité de MC cellules de mot. L'une des mémoires fonctionne en écriture pendant que l'autre mémoire fonctionne en lecture alternativement une période sur deux périodes de multitrame. Ainsi, dans chacune des mémoires, une multitrame de la voie entrante est complètement écrite pendant une première période de multitrame, puis une multitrame de la voie sortante est complètement lue pendant une seconde période de multitrame succèdant à la première.

La présente invention vise à réaliser la conversion de multitrame au moyen d'une unique mémoire ayant une capacité de MC cellules de mot, et donc à superimer l'une des mémoires selon la technique antérieure en vue de diminuer le coût d'une telle conversion.

A cette fin, un procédé de conversion de multitrame tel que défini dans l'entrée en matière est caractérisé en ce qu'un mot ayant un rang donné dans la multitrame sortante et un mot ayant ledit rang donné dans la multitrame entrante sont lu et écrit consécutivement dans une même cellule d'une unique mémoire ayant une capacité au moins égale à MC cellules de mot et en ce que les MC cellules de la mémoire sont adressées suivant un ordre d'adresses redevenant identique à lui-même après un cycle de N périodes de multitrame, où N est le plus petit entier tel que $C^N \equiv 1 \pmod{(MC-1)}$. De préférence, les cellules de mémoire sont successivement adressées suivant les adresses 0, $a_1$ telle que $C^{n-1} \equiv a_1 \pmod{(MC-1)}$, $a_2$ telle que $2C^{n-1} \equiv a_2 \pmod{(MC-1)}$, $a_3$ telle que $3C^{n-1} \equiv a_3 \pmod{(MC-1)}$, ... $a_{(MC-2)}$ telle que $(MC-2)C^{n-1} \equiv a_{(MC-2)} \pmod{(MC-1)}$, et $(MC-1)$ pendant la nième période de multitrame dudit cycle, où n est un entier compris entre 1 et N.

L'invention a également pour objet un dispositif de conversion de la multitrame entrante en la multitrame sortante pour la mise en oeuvre du procédé selon l'invention. Le dispositif de conversion est caractérisé en ce qu'il comprend des moyens pour compter les mots dans chaque multitrame entrante afin de fournir successivement les nombres 0 à $(MC-1)$ en code binaire pendant chaque période de multitrame, lesdits nombres 0 à $(MC-1)$ en code binaire constituant des adresses de cellule de mémoire successives pour la première période de multitrame du cycle, et des moyens pour convertir l'ordre naturel des nombres 0 à $(MC-1)$ en un ordre d'adresses spécifique à chacune des périodes de multitrame. En particulier, les moyens pour compter comprennent un compteur modulo MC synchrone avec les mots de la multitrame entrante pour fournir la suite de nombres 0 à $(MC-1)$ correspondant aux adresses pendant la première période de multitrame du cycle, et les moyens pour convertir comprennent un compteur modulo N incrémenté à chaque remise à zéro du compteur modulo MC pour fournir des signaux identifiant respectivement les N périodes de multitrame d'un cycle, et des moyens d'adressage de la mémoire pour établir des suites d'adresses ordonnées 0, $a_1$, $a_2$, $a_3$ ... $a_{(MC-2)}$, $(MC-1)$ à partir de la suite de nombres 0 à $(MC-1)$ en réponse aux signaux identifiant les N périodes de multitrame respectivement.

Selon une réalisation préférée correspondant aux structures de multitrame les plus couramment employées, le nombre C de canaux est une puissance de 2, tel que $2^x$, où x est un entier, ce qui permet de réaliser les moyens d'adressage avec un faible nombre de composants relativement simples. Dans ce cas, une adresse de cellule de mémoire en code binaire ayant un rang donné pendant une nième période de multitrame du cycle est déduite d'une première adresse de cellule de mémoire en code binaire ayant ledit rang donné pendant la première période de multitrame du cycle en décalant les bits de la première adresse de $x(n-1)$ rangs de bit à partir du rang de bit de poids faible de ladite première adresse. L'invention prévoit alors deux types de dispositif de conversion pour mettre en oeuvre le procédé selon la réalisation préférée.

Dans un premier dispositif, les moyens d'adressage comprennent K multiplexeurs. Chaque multiplexeur a N entrées et une sortie délivrant un bit de rang donné d'adresse de la mémoire, où K est un entier égal au nombre maximal de bits des adresses et au nombre maximal de bits des nombres 0 à $(MC-1)$ fournis par le compteur modulo MC. Les N entrées d'un kième multiplexeur, où k est un entier compris entre 1 et K, sont reliées respectivement aux sorties du compteur modulo MC fournissant les bits des nombres 0 à $(MC-1)$ ayant respectivement pour rang $R_0$ tel que $R_0 = k$, pour rang $R_1$ tel que $(k-1)+(K-x) \equiv R_1 - 1 \pmod{K}$, pour rang $R_2$ tel que $(k-1)+(K-x)2 \equiv R_1 - 1 \pmod{K}$, ... et pour rang $R_{N-1}$ tel que $(k-1)+(K-x)(N-1) \equiv R_{N-1} - 1 \pmod{K}$, les rangs étant comptés de 1 à K à partir du bit de poids faible des nombres 0 à $(MC-1)$. Les sorties des multiplexeurs sont reliées sélectivement aux entrées des multiplexeurs recevant les bits respectifs de rang $R_{n-1}$ en réponse au signal identifiant la nième période de multitrame du cycle.

Dans un second dispositif, les moyens d'adressage comprennent N moyens de transfert. Chaque moyen de transfert a K entrées et K sorties connectables respectivement aux entrées et délivrant K bits parallèles d'adresse de la mémoire, où K est un entier égal au nombre maximal de bits des adresses et au nombre maximal de bits des nombres 0 à $(MC-1)$ fournis par le compteur modulo MC. Les K entrées d'un nième moyen de transfert sont réliées respectivement aux sorties du compteur modulo MC fournissant les bits des nombres 0 à (MC−1) ayant respectivement pour rang $R_0$ tel que $0+(K−x)(n−1)\equiv R_0−1 \pmod{K}$, pour rang $R_1$ tel que $1+(K−x)(n−1)\equiv R_1−1 \pmod{K}$, pour rang $R_2$ tel que $2+(K−x)(n−1)\equiv R_1−1 \pmod{K}$ ... pour rang $R_{K−1}$ tel que $(K−1)+(K−x)(n−1)\equiv R_{K−1}−1 \pmod{K}$. Les entrées et les sorties du nième moyen de transfert sont respectivement reliées pour fournir une suite de MC adresses en réponse au signal identifiant la nième période de multitrame du cycle.

D'autres avantages de l'invention apparaîtront plus clairement à la lecture de la description suivante de plusieurs réalisations de l'invention en référence aux dessins annexés correspondants, dans lesquels:

— les Figs. 1A et 1B montrent respectivement des structures d'une multitrame entrante et d'une multitrame sortante selon une première réalisation pour laquelle C=3 et M=5;

— la Fig. 2 est un tableau d'adresse de cellules de mémoire pour un cycle de N=6 périodes de multitrame selon la première réalisation;

— les Figs. 3A et 3B montrent respectivement des structures d'une multitrame entrante et d'une multitrame sortante selon une seconde réalisation pour laquelle $C=2^3=8$ et $M=2^2=4$;

— la Fig. 4 est un tableau d'adresses de cellules de mémoire pour un cycle de N=5 périodes de multitrame selon la seconde réalisation;

— la Fig. 5 est un bloc-diagramme d'un premier dispositif de conversion pour la mise en oeuvre du procédé selon la seconde réalisation; et

— la Fig. 6 est un bloc-diagramme d'un second dispositif de conversion pour la mise en oeuvre du procédé selon la seconde réalisation.

Afin de mieux comprendre le procédé selon l'invention celui-ci est décrit en détail ci-après en référence à des valeurs numériques simples selon une première réalisation.

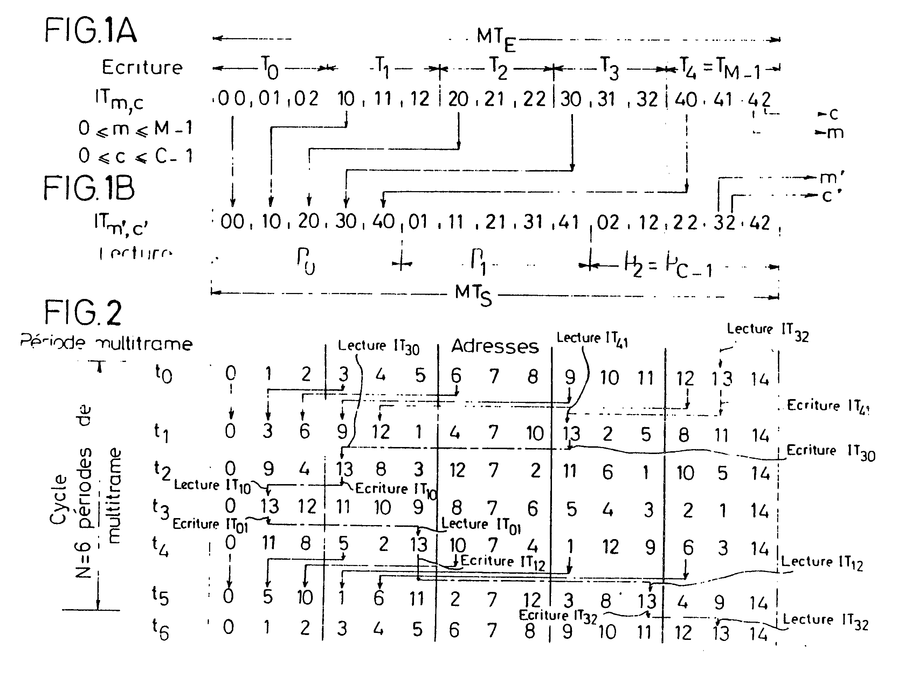

Selon cette première réalisation, une voie numérique entrante E convoie C=3 canaux MIC multiplexés temporellement, comme montré à la Fig. 1A. Une trame T de la voie entrante contient ainsi C=3 intervalles temporels assignés respectivement aux C canaux. Dans chaque intervalle temporel est inclus un mot de canal MIC ayant un nombre prédéterminé de digits, tel que 8 ou 10 bits.

Pour cette première réalisation, il est supposé que M=5 mots successifs dans chaque canal et contenus dans des intervalles temporels ayant un même rang dans M=5 trames successives $T_0$ à $T_{M−1}=T_4$ de la voie E sont à regrouper en un paquet, ou trame élémentaire sortante, dans une voie numérique sortante S. La voie sortante offre ainsi une multitrame $MT_S$ composée de C=3 paquets $P_0$ à $P_{C−1}=P_2$, comme montré à la Fig. 1B, résultant de la conversion d'une multitrame $MT_E$ de la voie entrante ayant M=5 trames $T_0$ à $T_{M−1}=T_4$, comme montré à la Fig. 1A. Si on désigne par $IT_{m,c}$ le contenu ou mot d'un intervalle temporel assigné au canal MIC de rang c dans une trame $T_m$ de la multitrame entrante $MT_E$, où c est un entier variant de 0 à C−1=2 et m est un entier variant de 0 à M−1=4, il apparaît que les mots $IT_{0,c}$ à $IT_{M−1,c}$ du canal MIC de rang c sont rangés successivement dans la multitrame sortante $MT_S$ en un paquet $P_c$ et que les mots $IT_{m,0}$ à $IT_{m,C−1}$ dans la trame $T_m$ sont rangés respectivement dans des intervalles temporels $IT_{m',0}$ à $IT_{m',C−1}$ de rang m=m' dans les paquets $P_0$ à $P_{C−1}$ de la multitrame sortante $MT_S$. $IT_{m',c'}$ désigne le contenu ou mot d'un intervalle temporel assigné au mot de rang m' d'un paquet $P_c'$ du canal de rang c=c', où m' et c' sont des entiers variant respectivement de 0 à M−1=4 et de 0 à C−1=2.

L'invention consiste ainsi à convertir la multitrame entrante $MT_E$ en la multitrame sortante $MT_S$ au moyen d'une unique mémoire 1 à accès aléatoire du type RAM, ayant une capacité minimale de M.C=5.3=15 cellules de mots. Plus précisément, la conversion de multitrame consiste pendant une première période de multitrame $t_0$ à lire dans une cellule de mémoire prédéterminée un mot $IT_{m',c'}$ à inclure dans une multitrame sortante et consécutivement à écrire dans la cellule prédéterminée un $a^{ième}$ mot $IT_{m,c}$ de la multitrame entrante succédant à la multitrame sortante, où a est un entier variant de 0 à (MC)−1=14 et désignant l'adresse de la cellule de mémoire prédéterminée telle que a=m'+c'M=c+mC.

En référence aux Figs. 1A, 1B et 2, par exemple, lorsque le mot $IT_{m',c'}=IT_{3,2}$ à inclure dans la multitrame sortante pendant la période $t_0$ est lu dans la cellule de mémoire ayant pour adresse 3+2.5=13, le mot $IT_{m,c}=IT_{4,1}$ ayant des indices tels que 1+4.3=13, est écrit dans la cellule d'adresse 13. Pendant une période de multitrame $t_1$ succédant à la période $t_0$, la cellule d'adresse a=13 est la 10ième cellule lue à partir du début de la période $t_1$ afin que le mot $IT_{4,1}$ écrit dans cette cellule au cours de la période précédente $t_0$ soit inclus dans le 10ième intervalle temporel correspondant dans une seconde multitrame sortante; simultanément, le 10ième mot $IT_{3,0}$ d'une multitrame entrante arrivant pendant la période $t_1$ est écrit dans la cellule d'adresse a=13. Pendant une période de multitrame $t_2$ succédant à la période $t_1$, la cellule d'adresse a=13 est la 4ième cellule lue afin que le mot $IT_{3,0}$ écrit dans cette cellule au cours de la période précédente $t_1$ soit inclus dans le 4ième intervalle temporel correspondant dans une troisième multitrame sortante; simultanément, le 4ième mot $IT_{1,0}$ d'une multitrame entrante arrivant pendant la période $t_2$ est écrit dans la cellule d'adresse a=13. Le rang de lecture de la cellule d'adresse a=13 est déduit d'une manière analogique pendant des périodes de multitrame suivantes $t_3$, $t_4$, $t_5$ et $t_6$ jusqu'à ce que le rang de la lecture de la cellule d'adresse a=13 soit de nouveau égal à 13, correspondant à la sixième période de multitrame $t_6$ succèdant à la période $t_0$ selon cette première réalisation. Il faut donc un cycle de N=6 périodes de multitrame pour retrouver un même ordre d'adresses de la mémoire.

Dans le tableau de la Fig. 2 est indiqué l'ordre des adresses des 15 cellules de la mémoire pendant chacune des périodes de multitrame $t_0$ à $t_6$, déduit pour chaque cellule d'une matière analogue à l'exemple décrit précédemment. Il apparaît que la conversion d'une multitrame entrante en une multitrame sortante

3

pendant une période de multitrame se traduit par un regroupement de mots écrits en un paquet $P_c$ s'effectuant en lisant les cellules ayant mémorisé des mots entrants de même rang c dans les trames $T_0$ à $T_4=T_{M-1}$ de la multitrame entrante précédemment écrite, c'est-à-dire de C=3 en C=3. Ainsi l'ordre d'adressage des cellules pendant la période $t_1$ est déduite de l'ordre d'adressage des cellules pendant la période $t_0$ en sélectionnant de 3 en 3 les adresses 0, 3, 6, 9 et 12 à partir de l'adresse 0 pour former le paquet $P_0$ du premier canal, en sélectionnant de 3 en 3 les adresses 1, 4, 7, 10 et 13 à partir de l'adresse 1 pour former le paquet $P_1$ du second canal, et en sélectionnant de 3 en 3 les adresses 2, 5, 8, 11 et 14 à partir de l'adresse 2 pour former le paquet $P_2$ du troisième canal. De même l'ordre d'adressage des cellules pendant les périodes $t_2$, $t_3$, $t_4$ et $t_5$ d'un cycle est déduite de l'ordre d'adressage des cellules pendant les périodes précédentes $t_1$, $t_2$, $t_3$ et $t_4$ respectivement, en sélectionnant de C=3 en C=3 les adresses pendant les périodes précédentes respectives.

Par rapport à l'ordre des adresses pendant la première période $t_0$ du cycle à N=6 périodes de multitrame, la sélection des adresses est donc effectuée de C=3 en C=3 pour la période $t_1$, de $C^2=9$ en $C^2=9$ pour la période $t_2$, de $C^3=27$ en $C^3=27$ pour la période $t_3$, de $C^4=81$ en $C^4=81$ pour la période $t_4$ et de $C^5=243$ en $C^5=243$ pour la période $t_5$. En d'autres termes des adresses $r_1$, $r_2$, $r_3$, $r_4$ et $r_5$ des cellules lues à un même rang $r_0$ dans les périodes de multitrame $t_1$, $t_2$, $t_3$, $t_4$ et $t_5$ que l'adresse $r_0$ dans la période de multitrame $t_0$, avec $0 < r_0 < MC-1$, sont déduites respectivement des relations $r_0 C \equiv r_1 \pmod{MC-1}$, $r_0 C^2 \equiv r_2 \pmod{MC-1}$, $r_0 C^3 \equiv r_3 \pmod{MC-1}$, $r_0 C^4 \equiv r_4 \pmod{MC-1}$, et $r_0 C^5 \equiv r_5 \pmod{MC-1}$. L'adresse 0 et l'adresse 14 sont toujours la première adresse et la dernière adresse dans toutes les périodes de multitrame $t_0$ à $t_5$.

Des sélections d'adresses précédentes peuvent être également déduites des relations indiquant les adresses des cellules lues successivement à la nième période de multitrame du cycle en fonction des adresses 1 à (MC−1)=14 des cellules lues successivement à la première période de multitrame $t_0$; par exemple, pour la nième=5ième période de multitrame $t_{n-1}=t_4$, les adresses successives sont $a_0=0$, $a_1=11$ telle que $3^4 \equiv a_1 \pmod{14}$, $a_2=8$ telle que $2.3^4 \equiv a_2 \pmod{14}$, $a_3=5$ telle que $3.3^4 \equiv a_3 \pmod{14}$, ... $a_{13}=3$ telle que $13.3^4 \equiv a_{13} \pmod{14}$, et $a_{14}=14$.

Par ailleurs, le nombre N de multitrames par cycle est défini, comme déjà dit, lorsqu'à une période de multitrame $t_N=t_6$, succédant la période $t_0$, l'adresse $r_0$ est lue au même rang que pour la période $t_0$, ce qui se traduit par la relation

$$r_0 C^N \equiv r_0 \pmod{MC-1},$$

soit le plus petit entier N tel que:

$$C^N \equiv 1 \pmod{MC-1}.$$

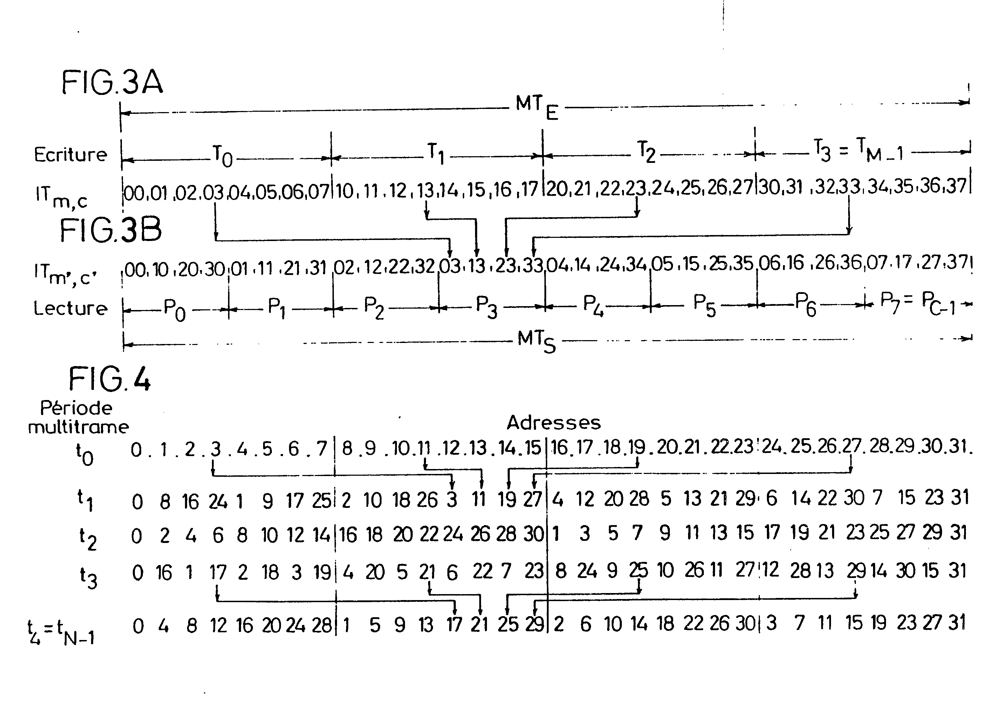

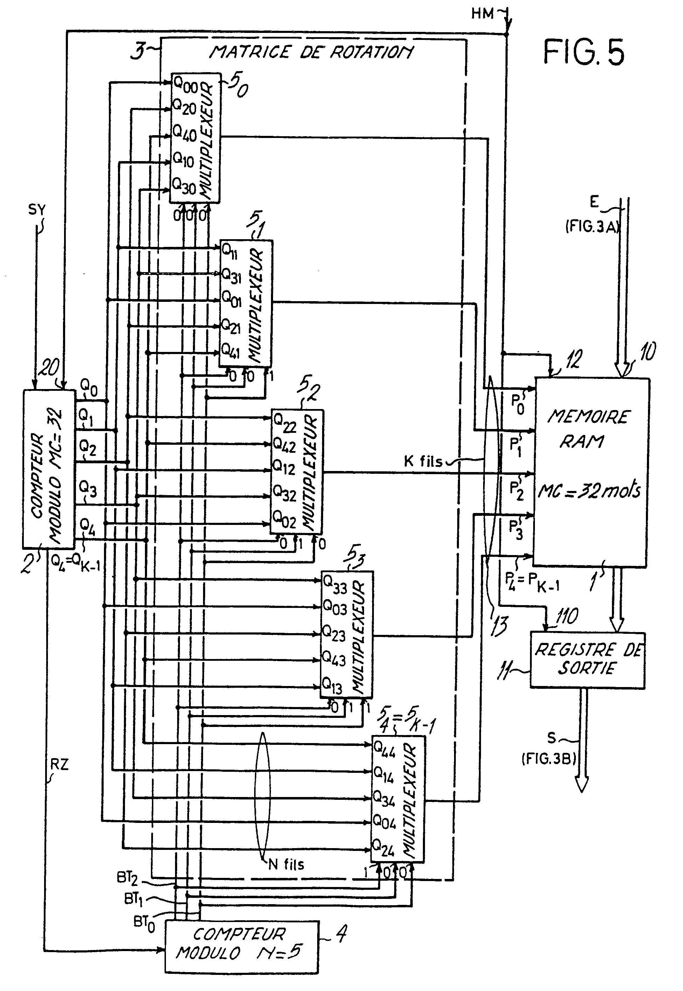

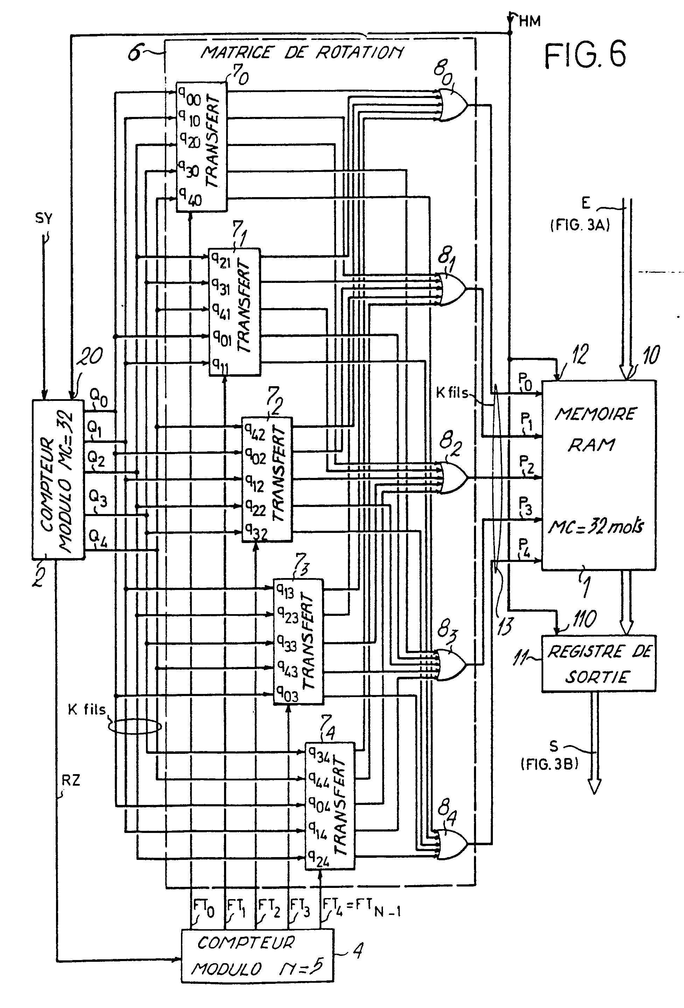

Le tableau de la Fig. 4 indique l'ordre des adresses pendant des périodes de multitrame successives correspondant à une seconde réalisation plus pratique selon laquelle les nombres C et M sont des puissances de 2. Selon cette seconde réalisation, une multitrame entrante $MT_E$ montrée à la Fig. 3A est composée de M=4 trames $T_0$ à $T_3$ contenant chacune C=8 mots de canaux numériques multiplexés, et une multitrame sortante $MT_S$ montrée à la Fig. 3B est composée de C=8 paquets $P_0$ à $P_7$ regroupant chacun M=4 mots succesifs d'un même canal. Des relations précédentes, on déduit qu'un cycle comprend N=5 multitrames puisque l'entier 5 est le plus petit entier N satisfaisant la relation

$$8^N \equiv 1 \pmod{32-1}$$

Les adresses pour les périodes de multitrame $t_1$ à $t_{N-1}=t_4$ sont déduites également des relations de congruence indiquées ci-dessus. Par exemple, des quatrièmes adresses $r_1$ à $r_4$ dans les périodes de multitrame $t_1$ à $t_4$ sont déduites des relations suivantes:

$3.8 \equiv r_1 \pmod{31}$, soit $r_1=24$
$3.8^2 \equiv r_2 \pmod{31}$, soit $r_2=6$
$3.8^3 \equiv r_3 \pmod{31}$, soit $r_3=17$
$3.8^4 \equiv r_4 \pmod{31}$, soit $r_4=12$

En référence maintenant à la Fig. 5, un dispositif de conversion selon l'invention comprend la mémoire RAM 1 ayant une capacité minimale de MC mots. La mémoire reçoit par des entrées 10 les mots sérialisés $IT_{m,c}$ avec bits parallèles de la voie entrante E et transmet à travers un registre de sortie à un mot 11 les mots sérialisés $IT_{m',c'}$ avec bits parallèles dans la voie sortant S. Par ailleurs, le dispositif de conversion reçoit un signal d'horloge HM à la fréquence des mots entrants, établi par un circuit classique de récupération de rythme et éventuellement de transcodage (non représenté) en amont des entrées 10. Le signal HM est appliqué à une entrée d'autorisation d'écriture/lecture 12 de la mémoire 1, à une entrée d'ordre de transfert 110 du registre 11 ainsi qu'à une entrée d'horloge 20 d'un compteur 2. Le compteur 2 inclus dans le dispositif de conversion est un compteur modulo MC qui est incrémenté d'une unité à chaque impulsion du signal HM et qui est synchronisé avec les trames entrantes grâce à un signal de synchronisation SY. Le signal SY est délivré par le circuit de récupération déjà cité, et est obtenu par exemple par détection d'un mot particulier dans la voie entrante E, tel qu'un mot de verrouillage de trame ou de multitrame propre au multiplexage des canaux MIC.

Dans la seconde réalisation pratique précitée pour laquelle $M=2^2=4$ et $C=2^3=8$ et $MC=32$, les adresses des 32 cellules de la mémoire 1 sont des mots ayant $K=\log_2 MC=5$ bits. Par suite, un bus de sortie à 5 fils $Q_0$, $Q_1$, $Q_2$, $Q_3$ et $Q_4$ du compteur 2 fournit à la fréquence du signal d'horloge de mot HM les adresses 0 à $MC-1=31$. $Q_0$ à $Q_4$ désignent également dans la suite les bits d'un mot d'adresse, $Q_0$ et $Q_4$ étant les bits de poids faible et de poids fort du mot d'adresse.

Le dispositif de conversion comprend également des moyens 3—4 pour convertir l'ordre naturel des adresses 0 à $MC-1=31$ correspondant à la première période de multitrame $t_0$ d'un cycle en l'ordre des adresses spécifique à chacune des périodes de multitrame $t_1$ à $t_4=t_{N-1}$, selon le tableau de la Fig. 4. Sachant qu'une adresse de cellule ayant des bits $P_4 P_3 P_2 P_1 P_0$, et un rang donné dans la suite des adresses pour une période de multitrame $t_1$ à $t_4=t_{N-1}$ est déduite de l'adresse de la cellule ayant des bits $A_4 A_3 A_2 A_1 A_0$ et ledit rang donné dans la suite des adresses pour la période de multitrame $t_0$ à $t_3$ précédant la période $t_1$ à $t_4$ par une multiplication par $C=2^x=2^3=8$ modulo $(2^5-1=31)$, c'est-à-dire modulo une puissance de 2 supérieure à $2^3$, la multiplication par 8 implique que l'adresse $P_4 P_3 P_2 P_1 P_0$ est déduite de l'adresse $A_4 A_3 A_2 A_1 A_0$ par un décalage de $x=3$ rangs de bits de cette adresse à partir du rang du bit de poids faible $A_0$. En d'autres termes, les bits $P_0, P_1, P_2, P_3$ et $P_4$ sont respectivement égaux à $A_3, A_4, A_0, A_1$ et $A_2$. Par exemple, l'adresse 14 au rang 8 pour la période $t_2$ selon le tableau de la Fig. 4 est déduite de l'adresse 25 au rang 8 pour la période $t_1$, selon les relations suivantes:

$$(\text{adresse } 25) = P_4\ P_3\ P_2\ P_1\ P_0 = 11001$$
$$\text{d'où}\quad A_3 = P_0 = 1$$
$$A_4 = P_1 = 0$$
$$A_0 = P_2 = 0$$
$$A_1 = P_3 = 1$$
$$A_2 = P_4 = 1$$
$$\text{soit (adresse } 14) = A_4\ A_3\ A_2\ A_1\ A_0 = 01110.$$

Par rapport à une adresse $Q_4 Q_3 Q_2 Q_1 Q_0$ à un rang donné pour la période $t_0$, les adresses au même rang pour les périodes de multitrame $t_1, t_2, t_3$ et $t_4$ d'un cycle sont déduites de celle-ci par des décalages ou permutations circulaires de bits à partir du rang de bit de poids faible, respectivement égaux à $3.1=3$, $3.2=6$, $3.3=9$ et $3.4=12$, et indiqués par le tableau I suivant:

TABLEAU I

| période de multitrame | | $t_0$ | $t_1$ | $t_2$ | $t_3$ | $t_4=t_{N-1}$ |
|---|---|---|---|---|---|---|
| | $P_0$ | $Q_0$ | $Q_2$ | $Q_4$ | $Q_1$ | $Q_3$ |
| | $P_1$ | $Q_1$ | $Q_3$ | $Q_0$ | $Q_2$ | $Q_4$ |
| adresse | $P_2$ | $Q_2$ | $Q_4$ | $Q_1$ | $Q_3$ | $Q_0$ |
| | $P_3$ | $Q_3$ | $Q_0$ | $Q_2$ | $Q_4$ | $Q_1$ |
| | $P_4=P_{K-1}$ | $Q_4$ | $Q_1$ | $Q_3$ | $Q_0$ | $Q_2$ |

Par exemple, toujours en référence au rang 8 selon le tableau de la Fig. 4, on a d'après le tableau I:

| | $t_0$ | $t_1$ | $t_2$ | $t_3$ | $t_4=t_{N-1}$ |
|---|---|---|---|---|---|
| adresse en code décimal | 7 | 25 | 14 | 19 | 28 |
| (poids faible) | 1 | 1 | 0 | 1 | 0 |
| | 1 | 0 | 1 | 1 | 0 |
| adresse en code binaire | 1 | 0 | 1 | 0 | 1 |
| (poids fort) | 0 | 1 | 1 | 0 | 1 |
| | 0 | 1 | 0 | 1 | 1 |

Comme montré à la Fig. 5, les moyens 3—4 pour obtenir les permutations des bits $Q_0$ à $Q_4$ selon le tableau I sont sous la forme d'une matrice de rotation 3 et d'un compteur 4.

La matrice de rotation 3 est composée de $K=5$ multiplexeurs $5_0$ à $5_4$ en parallèle ayant chacun $N=5$ entrées et une sortie $P_0$ à $P_4$. $N=5$ entrées de chacun des multiplexeurs $5_0$ à $5_4$ sont reliées aux sorties $Q_0$ à $Q_4$ du compteur d'adresse 2 en correspondance avec une ligne respective du tableau I. Ainsi des première, seconde, troisième, quatrième et cinquième entrées $Q_{00}, Q_{20}, Q_{40}, Q_{10}$ et $Q_{30}$ du premier multiplexeur $5_0$ sont reliées aux sorties $Q_0, Q_2, Q_4, Q_1$ et $Q_3$ du compteur 2 respectivement. Des première, seconde, troisième, quatrième et cinquième entrées $Q_{11}, Q_{31}, Q_{01}, Q_{21}$ et $Q_{41}$ du second multiplexeur $5_1$ sont reliées aux sorties $Q_1, Q_3, Q_0, Q_2$ et $Q_4$ du compteur 2 respectivement. Les liaisons des entrées des autres multiplexeurs $5_2, 5_3$ et $5_4$ avec les sorties du compteur 2 sont déduites d'une manière analogue, en correspondance avec les troisième, quatrième et cinquième lignes de bits du tableau I. Si on désigne par $R_0$ à $R_{K-1}$ les rangs des bits des nombres en code binaire 0 à $(MC-1)=31$ sortant du compteur 2, et appliqués respectivement aux première, seconde, troisième, ... et Nième entrées d'un quelconque multiplexeur, telles que les entrées $Q_{33}, Q_{03}, Q_{23}, Q_{43}$ et $Q_{13}$ du kième$=4$ième multiplexeur $5_3$, les bits des nombres 0 à $(MC-1)$ appliqués respectivement à ces entrées sont alors le bit $Q_3$ ayant pour rang $R_0$ tel que $R_0=k=4$, le bit $Q_0$ ayant pour rang $R_1$ tel que $(k-1)+(K-x)\equiv(R_1-1)\pmod K$, soit $R_1=1$, le bit $Q_2$ ayant pour rang $R_2$ tel

que $(k-1)+(K-x)2\equiv(R_2-1)$ (mod K), soit $R_2=3$, le bit $Q_4$ ayant pour rang $R_3$ tel que $(k-1)+(K-x)3\equiv(R_3-1)$ (mod K), soit $R_3=5$, et le bit $Q_1$ ayant pour rang $R_4$ tel que $(k-1)+(K-x)4\equiv(R_4-1)$ (mod K), soit $R_4=2$.

Par ailleurs, les sorties $P_0$ à $P_4$ des multiplexeurs $5_0$ à $5_4$ sont reliées à un bus d'adressage à K=5 fils 13 de la mémoire 1.

Le compteur 4 est un compteur modulo N qui est incrémenté d'une unité via un fil de sortie RZ du compteur 2 chaque fois que le compteur 2 est remis à zéro, c'est-à-dire après que le compte du compteur 2 a atteint MC−1=31. Le compteur 4 compte ainsi les périodes de multitrame d'un cycle, et son compte revient à zéro à la fin de chaque cycle de N=5 périodes de multitrame. Chaque période de multitrame $t_0$ à $t_4=t_{N-1}$ est marquée par le numéro correspondant 0 à 4 en code binaire dans un bus de sortie à 3 fils $BT_0$, $BT_1$ et $BT_2$ du compteur 4. Les fils $BT_0$ à $BT_2$ sont reliés à trois bornes de sélection d'entrées de chacun des multiplexeurs $5_0$ à $5_4$. Ainsi, dès que le compte du compteur 4 est égal à 0, le numéro 000 de la multitrame $t_0$ sur les fils $BT_0$, $BT_1$ et $BT_2$ provoque la sélection des premières entrées $Q_{00}$, $Q_{11}$, $Q_{22}$, $Q_{33}$ et $Q_{44}$ dans les multiplexeurs $5_0$ à $5_4$ pour relier respectivement les sorties $Q_0$ à $Q_4$ du compteur d'adresse 2 aux sorties $P_0$ à $P_4$ des multiplexeurs pendant toute le durée de la première période de multitrame $t_0$ d'un cycle et ainsi pour adresser la mémoire par les mots d'adresse composés des bits ayant pour rangs $R_0$ à $R_4$ égaux à 1, 2, 3, 4 et 5, comme défini ci-dessus. Puis, dès que le compte du compteur 4 est égal à 1, le numéro 001 de la trame $t_1$ sur les fils $BT_0$, $BT_1$ et $BT_2$ provoque la sélection des secondes entrées $Q_{20}$, $Q_{31}$, $Q_{42}$, $Q_{03}$ et $Q_{14}$ dans les multiplexeurs $5_0$ à $5_4$ pour relier respectivement les sorties $Q_2$, $Q_3$, $Q_4$, $Q_0$ et $Q_1$ du compteur 2 aux sorties $P_0$ à $P_4$ des multiplexeurs pendant toute la durée de la seconde période de multitrame $t_1$ du cycle. Les sélections des troisièmes entrées $Q_{40}$, $Q_{01}$, $Q_{12}$, $Q_{23}$ et $Q_{34}$, des quatrièmes entrée $Q_{10}$, $Q_{21}$, $Q_{32}$, $Q_{43}$ et $Q_{04}$ et des cinquièmes entrées $Q_{30}$, $Q_{41}$, $Q_{02}$, $Q_{13}$ et $Q_{24}$ des multiplexeurs $5_0$ à $5_4$ se produisent d'une manière analogue lorsque le compte du compteur 4 est égal à 2, 3 et 4=N−1, respectivement pendant les périodes $t_2$, $t_3$ et $t_4=T_{N-1}$. A chaque adresse $Q_4\,Q_3\,Q_2\,Q_1\,Q_0$ sortant du compteur 2 correspond l'adresse de sortie $P_4\,P_3\,P_2\,P_1\,P_0$ indiquée dans le tableau I pour chaque période de multitrame.

Selon une autre variante montrée à la Fig. 6, une matrice de rotation 6 comprend N=5 circuits logiques de transfert $7_0$ à $7_4=7_{N-1}$ en parallèle, offrant chacun K=5 entrées, K=5 sorties et une entrée de commande. Chaque circuit de transfert comporte K=5 portes ET à deux entrées. Les K entrées de chacun des circuits de transfert $7_0$ à $7_4$ sont reliées aux sorties du compteur d'adresse 2 en correspondance avec une colonne respective du tableau I. Ainsi, des première à cinquième entrées $q_{00}$, $q_{10}$, $q_{20}$, $q_{30}$ et $q_{40}$ du premier circuit de transfert $7_0$ sont reliées aux sorties $Q_0$ à $Q_4$ du compteur 2 respectivement. Des première à cinquième entrées $q_{21}$, $q_{31}$, $q_{41}$, $q_{01}$ et $q_{11}$ du second circuit de transfert $7_1$ sont reliées aux sorties $Q_2$, $Q_3$, $Q_4$, $Q_0$ et $Q_1$ du compteur 2. Des liaisons des entrées des autres circuits de transfert $7_2$, $7_3$ et $7_4$ avec les sorties du compteur 2 sont déduites d'une manière analogue, en correspondance avec les troisième, quatrième et cinquième colonnes de bits du tableau I, comme indiqué à la Fig. 6.

Ainsi, si on désigne par $R_0$ à $R_{K-1}$ les rangs des bits des nombres successifs 0 à (MC−1)=31 dans le compteur 2 appliqués respectivement aux première, seconde, troisième ... et Kième entrées d'un quelconque circuit de transfert, telles que les entrées $q_{13}$, $q_{23}$, $q_{33}$, $q_{43}$ et $q_{03}$ du n=4ième circuit de transfert $7_3$, les bits des nombres 0 à (MC−1) appliqués respectivement à ces entrées sont alors le bit $Q_1$ ayant pour rang $R_0$ tel que $0+(K-x)(n-1)\equiv R_0-1$ (mod K), soit $R_0=2$, le bit $Q_2$ ayant pour rang $R_1$ tel que $1+6\equiv R_1-1$ (mod 5), soit $R_1=3$, le bit $Q_3$ ayant pour rang $R_2$ tel que $2+6\equiv R_2-1$ (mod 5), soit $R_2=4$, le bit $Q_4$ ayant pour rang $R_3$ tel que $3+6\equiv R_3-1$ (mod 5), soit $R_3=5$, et le bit $Q_0$ ayant pour rang $R_4=R_{K-1}$ tel que $(K-1)+(K-x)(n-1)\equiv R_{K-1}-1$ (mod K), soit $R_4=1$.

Par ailleurs, les premières sorties des circuits de transfert $7_0$ à $7_4$ connectables aux premières entrées de ces circuits de transfert sont reliées à travers une porte OU $8_0$ à N=5 entrées à un premier fil $P_0$ du bus d'adressage 13 de la mémoire 1. De même les secondes, troisièmes, quatrièmes et cinquièmes sorties des circuits de transfert $7_0$ à $7_4$ connectables respectivement aux secondes, troisièmes, quatrièmes et cinquièmes entrées de ces circuits de transfert sont reliées respectivement à travers des portes OU $8_1$, $8_2$, $8_3$ et $8_4$ à N=5 entrées à des second, troisième, quatrième et cinquième fils $P_1$, $P_2$, $P_3$ et $P_4$ du bus d'adressage 13.

Selon cette autre variante, le compteur 4 offre un bus à N fils $FT_0$ à $FT_4$ pour sélectionner les circuits de transfert $7_0$ à $7_4$. Le fil $FT_0$ à $FT_4$ est relié à une entrée de commande commune aux K=5 portes ET dans le circuit $7_0$ à $7_4$. Ainsi, dès que le compte du compteur 4 est égal à n−1, où n varie entre 1 et N, le fil $FT_{n-1}$ passe à l'état "1" et y demeure pendant toute la nième période de multitrame $t_{n-1}$ d'un cycle de N périodes de multitrame afin que le nième circuit de transfert $7_{n-1}$ soit le seul circuit de transfert passant pour relier les sorties du compteur 2 aux fils d'adressage 13 de la mémoire 1 selon la nième colonne du tableau I.

## Revendications

1. Procédé pour convertir une multitrame entrante ($MT_E$) composée de M trames ($T_0$ à $T_{M-1}$) incluant chacune des mots ($IT_{m,c}$) ayant un nombre prédéterminé de digits et assignés respectivement à C canaux numériques multiplexés en une multitrame sortante ($MT_S$) composée de C paquets ($P_0$ à $P_{C-1}$) assignés respectivement aux canaux et contenant chacun M mots ($IT_{m',c'}$) successifs du canal respectif, caractérisé en ce qu'un mot ($IT_{m',c'}$) ayant un rang donné dans la multitrame sortante ($MT_S$) et un mot ($IT_{m,c}$) ayant ledit rang donné dans la multitrame entrante ($MT_E$) sont lu et écrit consécutivement dans une même cellule d'une unique mémoire (1) ayant une capacité au moins égale à MC cellules de mot et en ce que les MC cellules de la mémoire sont addressées suivant un ordre d'adresses redevenant identique à lui-même après un cycle de N périodes de multitrame ($t_0$ à $t_{N-1}$), où N est le plus petit entier tel que $C^N \equiv 1$ (mod (MC−1)).

2. Procédé conforme à la revendication 1, caractérisé en ce que les cellules de mémoire sont successivement adressées suivant les adresses 0, $a_1$ telle que $C^{n-1} \equiv a_1$ (mod (MC−1)), $a_2$ telle que $2C^{n-1} \equiv a_2$ (mod (MC−1)), $a_3$ telle que $3C^{n-1} \equiv a_3$ (mod (MC−1)), ... $a_{(MC-2)}$ telle que $(MC-2)C^{n-1} \equiv a_{(MC-2)}$ (mod (MC−1)), et (MC−1) pendant la nième période de multitrame ($t_{n-1}$) dudit cycle, où n est un entier compris entre 1 et N.

3. Procédé conforme à la revendication 1 ou 2, caractérisé en ce que C est égale à $2^x$ où x est un entier, et en ce qu'une adresse de cellule de mémoire en code binaire (P) ayant un rang donné pendant une nième période de multitrame ($t_{n-1}$) du cycle, où n est un entier compris entre 1 et N, est déduite d'une première adresse de cellule de mémoire en code binaire (Q) ayant ledit rang donné pendant la première période de multitrame ($t_0$) du cycle en décalant les bits de la première adresse de x(n−1) rangs de bit à partir du rang de bit de poids faible ($Q_0$) de ladite première adresse.

4. Dispositif de conversion de la multitrame entrante en la multitrame sortante pour la mise en oeuvre du procédé conforme à l'une quelconque des revendications 1 à 3, caractérisé en ce qu'il comprend des moyens (2) pour compter les mots ($IT_{m,c}$) dans chaque multitrame entrante ($MT_E$) afin de fournir successivement les nombres 0 à (MC−1) en code binaire pendant chaque période de multitrame ($t_0$ à $t_{N-1}$), lesdits nombres 0 à (MC−1) en code binaire constituant des adresses de cellule de mémoire successives pour la première période de multitrame ($t_0$) du cycle, et des moyens (3,4; 6,4) pour convertir l'ordre naturel des nombres 0 à (MC−1) en un ordre d'adresses (0, $a_1$ à $a_{MC-2}$, MC−1) spécifique à chacune des périodes de multitrame ($t_1$ à $t_{N-1}$).

5. Dispositif conforme à la revendication 4, caractérisé en ce que les moyens pour compter comprennent un compteur modulo MC (2) synchrone avec les mots ($IT_{m,c}$) de la multitrame entrante ($MT_E$) pour fournir la suite de nombres 0 à (MC−1) correspondant aux adresses pendant la première période de multitrame ($t_0$) du cycle, et en ce que les moyens pour convertir comprennent un compteur modulo N (4) incrémenté à chaque remise à zéro du compteur modulo MC pour fournir des signaux identifiant respectivement les N périodes de multitrame ($t_0$ à $t_{N-1}$) d'un cycle, et des moyens d'adressage de la mémoire (3; 6) pour établir des suites d'adresses ordonnées (0, $a_1$ à $a_{(MC-2)}$, (MC−1)) à partir de la suite de nombres 0 à (MC−1) en réponse aux signaux (BT; FT) identifiant les N périodes de multitrame ($t_0$ à $t_{N-1}$) respectivement.

6. Dispositif conforme à la revendication 5 pour la mise en oeuvre du procédé conforme à la revendication 3, caractérisé en ce que les moyens d'adressage (3) comprennent K multiplexeurs ($5_0$ à $5_{K-1}$), chaque multiplexeur ayant N entrées et une sortie délivrant un bit de rang donné d'adresse ($P_0$ à $P_{K-1}$) de la mémoire (1), où K est un entier égal au nombre maximal de bits ($P_0$ à $P_{K-1}$) des adresses et au nombre maximal de bits ($Q_0$ à $Q_{K-1}$) des nombres 0 à (MC−1) fournis par le compteur modulo MC (2), en ce que les N entrées du kième multiplexeur ($5_{K-1}$), où k est un entier compris entre 1 et K, sont reliées respectivement aux sorties du compteur modulo MC (2) fournissant les bits des nombres 0 à (MC−1) ayant respectivement pour rang $R_0$ tel que $R_0 = k$, pour rang $R_1$ tel que $(k-1)+(K-x) \equiv R_1 - 1$ (mod K), pour rang $R_2$ tel que $(k-1)+(K-x)2 \equiv R_2 - 1$ (mod K), ... et pour rang $R_{N-1}$ tel que $(k-1)+(K-x)(N-1) \equiv R_{N-1} - 1$ (mod K), les rangs étant comptés de 1 à K à partir du bit de poids faible des nombres 0 à (MC−1), et en ce que les sorties ($P_0$ à $P_{K-1}$) des multiplexeurs sont reliées sélectivement aux entrées des multiplexeurs recevant les bits respectifs de rang $R_{n-1}$ en réponse au signal identifiant la nième période de multitrame ($t_{n-1}$) du cycle.

7. Dispositif conforme à la revendication 5 pour la mise en oeuvre du procédé conforme à la revendication 3, caractérisé en ce que les moyens d'adressage (6) comprennent N moyens de transfert ($7_0$ à $7_{N-1}$), chaque moyen de transfert ayant K entrées et K sorties (13) connectables respectivement aux entrées et délivrant K bits parallèles d'adresse ($P_0$ à $P_{K-1}$) de la mémoire (1), où K est un entier égal au nombre maximal de bits ($P_0$ à $P_{K-1}$) des adresses et au nombre maximal de bits ($Q_0$ à $Q_{K-1}$) des nombres 0 à (MC−1) fournis par le compteur modulo MC (2), en ce que les K entrées d'un nième moyen de transfert ($7_{n-1}$) sont reliées respectivement aux sorties du compteur modulo MC (2) fournissant les bits des nombres 0 à (MC−1) ayant respectivement pour rang $R_0$ tel que $0+(K-x)(n-1) \equiv R_0 - 1$ (mod K), pour rang $R_1$ tel que $1+(K-x)(n-1) \equiv R_1 - 1$ (mod K), pour rang $R_2$ tel que $2+(K-x)(n-1) \equiv R_2 - 1$ (mod K), ... pour rang $R_{K-1}$ tel que $(K-1)+(K-x)(n-1) \equiv R_{K-1} - 1$ (mod K), et en ce que les entrées et les sorties du nième moyen de transfert ($7_{n-1}$) sont respectivement reliées pour fournir une suite de MC adresses en réponse au signal ($FT_{n-1}$) identifiant la nième période de multitrame ($t_{n-1}$) du cycle.

**Patentansprüche**

1. Verfahren zur Umwandlung eines ankommenden Mehrfachrahmens ($MT_E$), bestehend aus M Rahmen ($T_0$ bis $T_{M-1}$), von denen jeder Worte ($IT_{m,c}$) mit einer vorgegebenen Zahl von Stellen einschließt, die jeweils C gemultiplexten digitalen Kanälen in einem abgehenden Mehrfachrahmen ($MT_S$) zugeordnet sind, der aus C Paketen ($P_0$ bis $P_{C-1}$) besteht, die jeweils den Kanälen zugeordnet sind und von denen jedes M aufeinanderfolgende Worte ($IT_{m',c'}$) des entsprechenden Kanals enthält, dadurch gekennzeichnet, daß ein Wort ($IT_{m',c'}$), das eine vorgegebene Stelle im abgehenden Mehrfachrahmen ($MT_S$) einnimmt, und ein

Wort ($IT_{m,c}$), das besagte vorgegebene Stelle im ankommenden Mehrfachrahmen ($MT_E$) einnimmt, nacheinander aus derselben Zelle eines einzigen Speichers (1), der ein Speichervermögen von mindestens MC Wortzellen aufweist, ausgelesen und eingeschrieben werden, und daß die MC Speicherzellen entsprechend einer Adressenfolge adressiert werden, die sich nach einem Zyklus von N Perioden des Mehrfachrahmens ($t_0$ bis $t_{N-1}$) identisch wiederholt, wobei N die kleinste ganze Zahl ist, für die $C^N \equiv 1$ (mod (MC−1)) gilt.

2. Verfahren nach Anspruch 1, dadurch gekennzeichnet, daß die Speicherzellen nacheinander entsprechend den Adressen 0, $a_1$, wobei $C^{n-1} \equiv a_1$ (mod (MC−1)) ist, $a_2$, wobei $2C^{n-1} \equiv a_2$ (mod (MC−1)) ist, $a_3$, wobei $3C^{n-1} \equiv a_3$ (mod (MC−1)) ist, . . ., $a_{(MC-2)}$, wobei $(MC-2)C^{n-1} \equiv a_{(MC-2)}$ (mod (MC−1)) ist, und (MC−1) während der n-ten Periode des Mehrfachrahmens ($t_{n-1}$) des besagten Zyklus adressiert werden, wobei n eine ganze Zahl zwischen 1 und N ist.

3. Verfahren nach Anspruch 1 oder 2, dadurch gekennzeichnet, daß C gleich $2^x$ ist, wobei x eine ganze Zahl ist, und daß eine Adresse einer Speicherzelle im Binärcode (P), die eine gegebene Stelle während einer n-ten Periode des Mehrfachrahmens ($t_{n-1}$) des Zyklus einnimmt, wobei n eine ganze Zahl zwischen 1 und N ist, aus einer ersten Adresse der Speicherzelle im Binärcode (Q), die besagte Stelle während der ersten Periode des Mehrfachrahmens ($t_0$) des Zyklus einnimmt, abgeleitet wird durch Verschieben der Bits der ersten Adresse um x(n−1) Bitstellen von der Stelle des niederwertigsten Bits ($Q_0$) der besagten ersten Adresse an.

4. Anordnung zur Umwandlung des ankommenden Mehrfachrahmens in den abgehenden Mehrfachrahmen zur Durchführung des Verfahrens nach einem der Ansprüche 1 bis 3, dadurch gekennzeichnet, daß sie Einrichtungen (2) zum Zählen der Worte ($IT_{m,c}$) in jedem ankommenden Mehrfachrahmen ($MT_E$) aufweist, um nacheinander die Zahlen 0 bis (MC−1) im Binärcode während jeder Periode des Mehrfachrahmens ($t_0$ bis $t_{N-1}$) bereitzustellen, wobei besagte Zahlen 0 bis (MC−1) im Binärcode Adressen der aufeinanderfolgenden Speicherzellen für die erste Periode des Mehrfachrahmens ($t_0$) des Zyklus bilden, und Einrichtungen (3,4; 6,4) zur Umwandlung der natürlichen Ordnung der Zahlen 0 bis (MC−1) in eine für jede Periode des Mehrfachrahmens ($t_1$ bis $t_{N-1}$) spezifische Adressenordnung aufweist.

5. Anordnung nach Anspruch 4, dadurch gekennzeichnet, daß die Zähleinrichtungen einen synchron zu den Worten ($IT_{m,c}$) des ankommenden Mehrfachrahmens ($MT_E$) arbeitenden Modulo MC-Zähler (2) beinhalten, um die Folge der Zahlen 0 bis (MC−1) bereitzustellen, die den Adressen während der ersten Periode des Mehrfachrahmens ($t_0$) des Zyklus entsprechen, und daß die Einrichtungen zur Umwandlung einen Modulo N-Zähler (4), der bei jedem Zurückstellen des Modulo MC-Zählers auf Null hochgezählt wird, beinhalten zur Bereitstellung der Signale, die die N Perioden des Mehrfachrahmens ($t_0$ bis $t_{N-1}$) eines Zyklus jeweils kennzeichnen, und Mittel beinhalten zur Adressierung des Speichers (3; 6), um die geordneten Adressenfolgen (0, $a_1$ bis $a_{(MC-2)}$, (MC−1)) ausgehend von der Folge der Zahlen 0 bis (MC−1) aufzustellen als Antwort auf die Signale (BT; FT), die jeweils die N Perioden des Mehrfachrahmens ($t_0$ bis $t_{N-1}$) kennzeichnen.

6. Anordnung nach Anspruch 5 zur Durchführung des Verfahrens nach Anspruch 3, dadurch gekennzeichnet, daß die Adressiereinrichtung (3) K Multiplexer ($5_0$ bis $5_{K-1}$) beinhaltet, wobei jeder Multiplexer N Eingänge und einen Ausgang aufweist, der ein Bit der Adresse ($P_0$ bis $P_{K-1}$) des Speichers (1) mit gegebener Stellenwertigkeit ausgibt, wobei K eine ganze Zahl und gleich der Maximalzahl der Bits ($P_0$ bis $P_{K-1}$) der Adressen und gleich der Maximalzahl der Bits ($Q_0$ bis $Q_{K-1}$) der Zahlen 0 bis (MC−1), die der Modulo MC-Zähler (2) bereitstellt, ist, und daß die N Eingänge des k-ten Multiplexers ($5_{K-1}$), wobei k eine ganze Zahl zwischen 1 und K ist, jeweils mit den Ausgängen des Modulo MC-Zählers (2) verbunden sind, der die Bits der Zahlen 0 bis (MC−1) bereitstellt, die jeweils die Stellenwertigkeiten $R_0$, wobei $R_0 = k$ ist, $R_1$, wobei $(k-1)+(K-x) \equiv R_1-1$ (mod K) ist, $R_2$, wobei $(k-1)+(K-x)2 \equiv R_2-1$ (mod K) ist, . . ., und $R_{N-1}$, wobei $(k-1)+(K-x)(N-1) \equiv R_{N-1}-1$ (mod K) ist, aufweisen, wobei die Stellenwertigkeiten von 1 bis K vom niederwertigsten Bit der Zahlen 0 bis (MC−1) an gezählt werden, und daß die Ausgänge ($P_0$ bis $P_{K-1}$) der Multiplexer abgestimmt (sélectivement) mit den Eingängen der Multiplexer verbunden sind, die die jeweiligen Bits mit Stellenwertigkeit $R_{n-1}$ als Antwort auf das Signal, das die n-te Periode des Mehrfachrahmens ($t_{n-1}$) des Zyklus kennzeichnet, empfangen.

7. Anordnung nach Anspruch 5 zur Durchführung des Verfahrens nach Anspruch 3, dadurch gekennzeichnet, daß die Adressiereinrichtung (6) N Übertragungseinrichtungen ($7_0$ bis $7_{N-1}$) beinhaltet, wobei jede Übertragungseinrichtung K Eingänge und K Ausgänge (13) aufweist, die jeweils mit den Eingängen verbindbar sind und die K parallele Bits der Adresse ($P_0$ bis $P_{K-1}$) des Speichers (1) abgeben, wobei K eine ganze Zahl und gleich der Maximalzahl der Bits ($P_0$ bis $P_{K-1}$) der Adressen und gleich der Maximalzahl der Bits ($Q_0$ bis $Q_{K-1}$) der Zahlen 0 bis (MC−1) ist, die der Modulo MC-Zähler (2) bereitstellt, und daß die K Eingänge einer n-ten Übertragungseinrichtung ($7_{n-1}$) jeweils mit den Ausgängen des Modulo MC-Zählers (2) verbunden sind, der die Bits der Zahlen 0 bis (MC−1) bereitstellt, die jeweils eine Stellenwertigkeit von $R_0$, wobei $0+(K-x)(n-1) \equiv R_0-1$ (mod K) ist, $R_1$, wobei $1+(K-x)(n-1) \equiv R_1-1$ (mod K) ist, $R_2$, wobei $2+(K-x)(n-1) \equiv R_2-1$ (mod K) ist, . . ., $R_{K-1}$, wobei $(K-1)+(K-x)(n-1) \equiv R_{K-1}-1$ (mod K) ist, aufweisen, und daß die Engänge und die Ausgänge der n-ten Übertragungseinrichtung ($7_{n-1}$) jeweils miteinander verbunden sind, um eine Folge von MC Adressen als Antwort auf das Signal ($FT_{n-1}$) zu erzeugen, das die n-te Periode des Mehrfachrahmens ($t_{n-1}$) des Zyklus kennzeichnet.

# EP 0 208 604 B1

## Claims

1. Process for converting an inputting multiframe ($MT_E$) consisting of M frames ($T_0$ to $T_{M-1}$) each including words ($IT_{m,c}$) having a predetermined number of digits and assigned respectively to C digital channels multiplexed into one outgoing multiframe ($MT_S$) consisting of C packets ($P_0$ to $P_{c-1}$) assigned respectively to the channels, each packet including M successive words ($IT_{m',c'}$) of the respective channel, characterized in that a word ($IT_{m',c'}$) having a given rank in the outgoing multiframe ($MT_S$) and a word ($IT_{m,c}$) having said given rank in the inputting multiframe ($MT_E$) are read and written consecutively in a same cell of a single memory (1) having a capacity at least equal to MC word cells and in that the MC cells of the memory are addressed according to an address order rebecoming identical to itself after a cycle of N multiframe periods ($t_0$ to $t_{N-1}$), where N is the smallest integer so that $C_N \equiv 1 \ (mod \ (MC-1))$.

2. Process according to claim 1, characterised in that the memory cells are successively addressed according to addresses 0, $a_1$ so that $C^{n-1} \equiv a_1 \ (mod \ (MC-1))$, $a_2$ so that $2C^{n-1} \equiv a_2 \ (mod \ (MC-1))$, $a_3$ so that $3C^{n-1} \equiv a_3 \ (mod \ (MC-1)) \ldots a_{(MC-2)}$ so that $(MC-2)C_{n-1} \equiv a_{(MC-2)} \ (mod \ (MC-1))$, and $(MC-1)$ during the nth multiframe period ($t_{n-1}$) of said cycle, where n is an integer laying between 1 and N.

3. Process according to claim 1 or 2, characterized in that C is equal to $2^x$ where x is an integer, and in that a memory cell address in binary code (P) having a given rank during a nth multiframe period ($t_{n-1}$) of the cycle, where n is an integer laying between 1 and N, is deduced from a first memory cell address coded in binary code (Q) having said given rank during the first multiframe period ($t_0$) of the cycle, by shifting bits of the first address of $x(n-1)$ bit ranks as from a least significant bit rank ($Q_0$) of said first address.

4. Device for converting the inputting multiframe into the outgoing multiframe for the implementation of the process according to any one of claims 1 to 3, characterized in that it comprises means (2) for counting words ($IT_{m,c}$) in each inputting multiframe ($MT_E$) thereby successively supplying binary-coded numbers 0 to $(MC-1)$ during each multiframe period ($t_0$ to $t_{N-1}$), said binary-coded numbers 0 to $(MC-1)$ forming successive addresses of memory cell for the first multiframe period ($t_0$) of the cycle, and means (3, 4; 6, 4) for converting the natural order of numbers 0 to $(MC-1)$ into an address order (0, $a_1$ to $a_{MC-2}$, $MC-1$) specific to each of the multiframe periods ($t_1$ to $t_{N-1}$).

5. Device according to claim 4, characterized in that the counting means comprise a modulo-MC counter (2) synchronized with the words ($IT_{m,c}$) of the inputting multiframe ($MT_E$) for supplying number 0 to $(MC-1)$ corresponding to addresses during the first multiframe period ($t_0$) of the cycle, and in that the converting means comprise a modulo-N counter (4) incremented responsive to each reset of the modulo-MC counter for supplying signals respectively identifying the N multiframe periods ($t_0$ to $t_{N-1}$) of a cycle, and memory addressing means (3; 6) for deriving ordered address sequences (0, $a_1$ to $a_{(MC-2)}$, $(MC-1)$) in terms of the series of the numbers 0 to $(MC-1)$ responsive to signals (BT; FT) identifying the N multiframe periods ($t_0$ to $t_{N-1}$) respectively.

6. Device according to claim 5 for the implementation of the process according to claim 3, characterized in that the addressing means (3) comprises K multiplexers ($5_0$ to $5_{K-1}$), each multiplexer having N inputs and one input delivering a bit with a given rank of address ($P_0$ to $P_{K-1}$) of the memory (1), where k is an integer equal to the maximum number of bits ($P_0$ to $P_{K-1}$) in addresses and to the maximum number of bits ($Q_0$ to $Q_{K-1}$) in numbers 0 to $(MC-1)$ supplied by the modulo-MC counter (2), in that the N inputs of the kth multiplexer ($5_{K-1}$), where k is an integer laying between 1 and K, are respectively connected to the outputs of the modulo-MC counter (2) supplying bits of numbers 0 to $(MC-1)$ having respectively rank $R_0$ so that $R_0 = k$, rank $R_1$ so that $(k-1)+(K-x) \equiv R_1 - 1 \ (mod \ k)$, rank $R_2$ so that $(k-1)+(K-x) \equiv R_2 - 1 \ (mod \ K), \ldots$ and rank $R_{N-1}$ so that $(k-1)+(K-x)(N-1) \equiv R_{N-1} - 1 \ (mod \ K)$, the ranks being counted from 1 to K as from a least significant bit in the numbers 0 to $(MC-1)$, and in that outputs ($P_0$ to $P_{K-1}$) of multiplexers are selectively connected to inputs of multiplexers receiving the respective bits of rank $R_{n-1}$ responsive to the signal identifying the nth multiframe period ($t_{n-1}$) of the cycle.

7. Device according to claim 5 for the implementation of the process according to claim 3, characterized in that the addressing means (6) comprise N transfer means ($7_0$ to $7_{N-1}$), each transfer means having K inputs and K outputs (13) each being respectively connectable to the inputs and delivering K parallel bits of address ($P_0$ to $P_{K-1}$) of the memory (1), where K is an integer equal to the maximum number of bits ($P_0$ to $P_{K-1}$) of the addresses and to the maximum number of bits ($Q_0$ to $Q_{K-1}$) of numbers 0 to $(MC-1)$ supplied by the modulo-MC counter (2), in that the K inputs of a nth transfer means ($7_{n-1}$) are respectively connected to the outputs of the modulo-MC counter (2) supplying bits of numbers 0 to $(MC-1)$ having respectively rank $R_0$ so that $0+(K-x)(n-1) \equiv R_0 - 1 \ (mod \ K)$, rank $R_1$ so that $1+(K-x)(n-1) \equiv R_1 - 1 \ (mod \ K)$, rank $R_2$ so that $2+(K-x)(n-1) \equiv R_2 - 1 \ (mod \ K), \ldots$ rank $R_{K-1}$ so that $(K-1)+(K-x)(n-1) \equiv R_{K-1} - 1 \ (mod \ K)$ and in that the inputs and outputs of the Nth transfer means ($7_{n-1}$) are respectively connected to supply a sequence of MC addresses in response to the signal ($FT_{n-1}$) identifying the nth multiframe period ($t_{n-1}$) of the cycle.

## FIG.1A

$MT_E$

Ecriture

$T_0$ — $T_1$ — $T_2$ — $T_3$ — $T_4 = T_{M-1}$

$IT_{m,c}$

00,01,02 | 10,11,12 | 20,21,22 | 30,31,32 | 40,41,42

$0 \leqslant m \leqslant M-1$

$0 \leqslant c \leqslant C-1$

— c
— m

## FIG.1B

— m'
— c'

$IT_{m',c'}$

00,10,20,30,40,01,11,21,31,41,02,12,22,32,42

Lecture

$P_0$ — $P_1$ — $P_2 = P_{C-1}$

$MT_S$

## FIG.2

Période multitrame

T

Cycle de N=6 périodes de multitrame

Adresses

Lecture $IT_{30}$   Lecture $IT_{41}$   Lecture $IT_{32}$

| | | | | | | | | | | | | | | | |
|---|---|---|---|---|---|---|---|---|---|---|---|---|---|---|---|
| $t_0$ | 0 | 1 | 2 | 3 | 4 | 5 | 6 | 7 | 8 | 9 | 10 | 11 | 12 | 13 | 14 |
| $t_1$ | 0 | 3 | 6 | 9 | 12 | 1 | 4 | 7 | 10 | 13 | 2 | 5 | 8 | 11 | 14 |
| $t_2$ | 0 | 9 | 4 | 13 | 8 | 3 | 12 | 7 | 2 | 11 | 6 | 1 | 10 | 5 | 14 |
| $t_3$ | 0 | 13 | 12 | 11 | 10 | 9 | 8 | 7 | 6 | 5 | 4 | 3 | 2 | 1 | 14 |
| $t_4$ | 0 | 11 | 8 | 5 | 2 | 13 | 10 | 7 | 4 | 1 | 12 | 9 | 6 | 3 | 14 |
| $t_5$ | 0 | 5 | 10 | 1 | 6 | 11 | 2 | 7 | 12 | 3 | 8 | 13 | 4 | 9 | 14 |
| $t_6$ | 0 | 1 | 2 | 3 | 4 | 5 | 6 | 7 | 8 | 9 | 10 | 11 | 12 | 13 | 14 |

Ecriture $IT_{41}$

Ecriture $IT_{30}$

Lecture $IT_{10}$   Ecriture $IT_{10}$

Ecriture $IT_{01}$   Lecture $IT_{01}$

Ecriture $IT_{12}$   Lecture $IT_{12}$

Ecriture $IT_{32}$   Lecture $IT_{32}$

## FIG.3A

Ecriture

$IT_{m,c}$

| $T_0$ | $T_1$ | $T_2$ | $T_3 = T_{M-1}$ |

$MT_E$

00,01,02,03,04,05,06,07|10,11,12,13,14,15,16,17|20,21,22,23,24,25,26,27|30,31,32,33,34,35,36,37|

## FIG.3B

$IT_{m',c'}$

00,10,20,30|01,11,21,31|02,12,22,32|03,13,23,33|04,14,24,34|05,15,25,35|06,16,26,36|07,17,27,37|

Lecture

| $P_0$ | $P_1$ | $P_2$ | $P_3$ | $P_4$ | $P_5$ | $P_6$ | $P_7 = P_{C-1}$ |

$MT_S$

## FIG.4

Adresses

Période multitrame

$t_0$: 0.1.2.3.4.5.6.7|8.9.10.11.12.13.14.15|16.17.18.19.20.21.22.23|24.25.26.27.28.29.30.31.

$t_1$: 0 8 16 24 1 9 17 25|2 10 18 26 3 11 19 27|4 12 20 28 5 13 21 29|6 14 22 30 7 15 23 31

$t_2$: 0 2 4 6 8 10 12 14|16 18 20 22 24 26 28 30|1 3 5 7 9 11 13 15|17 19 21 23 25 27 29 31

$t_3$: 0 16 1 17 2 18 3 19|4 20 5 21 6 22 7 23|8 24 9 25 10 26 11 27|12 28 13 29 14 30 15 31

$t_z = t_{N-1}$: 0 4 8 12 16 20 24 28|1 5 9 13 17 21 25 29|2 6 10 14 18 22 26 30|3 7 11 15 19 23 27 31

2

FIG.5

FIG.6